# EUROPEAN PATENT APPLICATION

(11) **EP 3 929 765 A1**
(43) Date of publication of application: **29.12.2021**
(21) Application number: 21170212.1
(22) Date of filing: 23.04.2021
(51) Int. Cl.: G06F 16/29

(54) **GEOGRAPHIC INFORMATION SYSTEM ENGINE SYSTEM, IMPLEMENTATION METHOD, DEVICE AND STORAGE MEDIUM THEREOF**

(30) Priority: 22.06.2020 CN 202010577170
(71) Applicant: Beijing Baidu Netcom Science and Technology Co., Ltd., Beijing 100085 (CN)
(72) Inventor: ZHANG, Mengmeng, Beijing, Beijing 100085 (CN); LI, Leding, Beijing, Beijing 100085 (CN); MA, Hailei, Beijing, Beijing 100085 (CN); MENG, Linhao, Beijing, Beijing 100085 (CN); WU, Ao, Beijing, Beijing 100085 (CN)
(74) Representative: dompatent von Kreisler Selting Werner - Partnerschaft von Patent- und Rechtsanwälten mbB

(57) **Abstract**

The present disclosure discloses a geographic information system engine system, an implementation method, a device and a storage medium thereof, and relates to the fields of intelligent search and cloud computing. The system may include: an underlying data source supporting N different data sources and a core engine layer, N being a positive integer greater than one; the core engine layer including a full-text search layer configured for serving as a cache for full-text search, implementing data consistency with the underlying data source through a distributed locking mechanism, and ensuring data timeliness by micro-batch updating; and a service providing layer configured for providing various services based on the full-text search layer and the underlying data source. The performance of a geographic information system engine can be improved by use of the solutions according to the present disclosure.

## Description

### TECHNICAL FIELD

The present disclosure relates to computer application technologies, and particularly to the fields of intelligent search and cloud computing, and more particularly to a geographic information system (GIS) engine system, an implementation method, a device and a storage medium thereof.

### BACKGROUND

As a common intelligent search engine system, a current GIS engine system generally adopts an open source Geoserver to connect an underlying data source, and generally releases services supporting an Open Geospatial Consortium (OGC) through the Geoserver.

The GIS engine system supports only a single data source, such as an object relational database management system (postgresql) or a local shapefile, which is limited in performance, supports only relational query, and is inefficient in search.

### SUMMARY

The present disclosure provides a geographic information system engine system, an implementation method, a device and a storage medium thereof.

A GIS engine system is provided, including:
an underlying data source supporting N different data sources, and a core engine layer, N being a positive integer greater than one; the core engine layer including;
a full-text search layer configured for serving as a cache for full-text search, implementing data consistency with the underlying data source through a distributed locking mechanism, and ensuring data timeliness by micro-batch updating; and
a service providing layer configured for providing various services based on the full-text search layer and the underlying data source.

A method for implementing a GIS engine system is provided, including:
constructing a GIS engine system including an underlying data source supporting N different data sources, and a core engine layer, N being a positive integer greater than one; and
providing a full-text search layer and a service providing layer in the core engine layer; wherein the full-text search layer is configured for serving as a cache for full-text search, implementing data consistency with the underlying data source through a distributed locking mechanism, and ensuring data timeliness by micro-batch updating; and the service providing layer is configured for providing various services based on the full-text search layer and the underlying data source.

An electronic device is provided, including:
at least one processor; and
a memory in communication connection with the at least one processor; wherein
the memory stores instructions executable by the at least one processor, and the instructions are executed by the at least one processor to enable the at least one processor to perform the method as described above.

A non-transitory computer-readable storage medium storing instructions which, when executed by a computer, cause the computer to carry out the method as described above.

A computer program product storing instructions which, when the program is executed by a computer, cause the computer to carry out the method as described above.

Some embodiments of the present disclosure has the following advantages or beneficial effects: it can support a variety of different data sources and is no longer limited to a single data source, thus improving the performance of the GIS engine and having a wide range of applicability; moreover, full-text search can be implemented according to a full-text search layer, thereby improving search efficiency and search accuracy.

It shall be understood that the content described in this part is neither intended to identify key or important features of embodiments of the present disclosure and nor intended to limit the scope of the present disclosure. Other features of the present disclosure will be readily understood through the following specification.

### BRIEF DESCRIPTION OF THE DRAWINGS

The accompanying drawings are intended to better understand the solution and do not constitute limitations on the present disclosure. In the drawings,
Fig. 1 is a schematic structure diagram of a GIS engine system 100 according to a first embodiment of the present disclosure;
Fig. 2 is a schematic structure diagram of a GIS engine system 100 according to a second embodiment of the present disclosure;
Fig. 3 is a schematic diagram of distributed cluster deployment corresponding to an ElasticSearch 201 according to the present disclosure;
Fig. 4 is a schematic diagram of a method for supporting a plurality of data sources according to the present disclosure;
Fig. 5 is a schematic diagram of a plurality of data centers according to the present disclosure;
Fig. 6 is a schematic diagram of logical architecture and resource orchestration corresponding to the GIS engine system 100 according to the present disclosure;
Fig. 7 is a flow chart of a method for implementing a GIS engine system according to an embodiment of the present disclosure; and
Fig. 8 is a block diagram of an electronic device carrying out a method according to an embodiment of the present disclosure.

### DETAILED DESCRIPTION OF EMBODIMENTS

Exemplary embodiments of the present disclosure are described below with reference to the accompanying drawings, including various details of the embodiments of the present disclosure to facilitate understanding, and should be considered as exemplary only. Therefore, those of ordinary skill in the art should be aware that various changes and modifications can be made to the embodiments described herein without departing from the scope and spirit of the present disclosure. Similarly, for clarity and simplicity, descriptions of well-known functions and structures are omitted in the following description.

In addition, it shall be understood that the term "and/or" herein is merely an association relationship describing associated objects, indicating that three relationships may exist. For example, A and/or B indicates that there are three cases of A alone, A and B together, and B alone. In addition, the character "/" herein generally means that associated objects before and after it are in an "or" relationship.

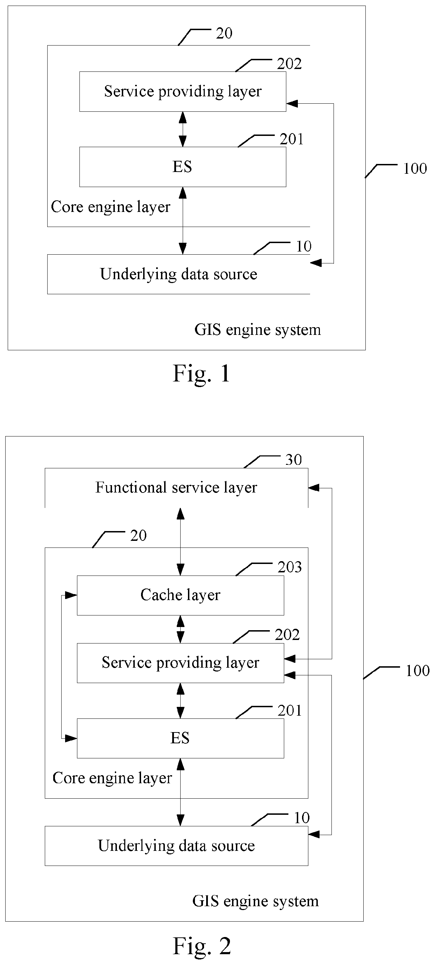

Fig. 1 is a schematic composite structure diagram of a GIS engine system 100 according to a first embodiment of the present disclosure. As shown in Fig. 1, the GIS engine system includes: an underlying data source 10 supporting N different data sources and a core engine layer 20, N being a positive integer greater than one. The core engine layer 20 includes a full-text search engine, such as an ElasticSearch (ES) 201 and a service providing layer 202.

The ES 201 serves as a cache for full-text search, and may implement data consistency with the underlying data source through a distributed locking mechanism, and ensure data timeliness by micro-batch updating. The service providing layer 202 may provide various services based on the ES 201 and the underlying data source 10.

Fig. 2 is a schematic structure diagram of a GIS engine system 100 according to a second embodiment of the present disclosure. As shown in Fig. 2, the GIS engine system 100 may further include a functional service layer 30 configured to uniformly encapsulate the services provided by the core engine layer 20 into a micro-service form.

The above parts are specifically described below respectively.

### 1) Underlying data source 10

Through a customized multi-source data adapter, the underlying data source 10 may support a variety of different data sources, such as postgresql, a data warehouse application oriented relational database (greenplum), a Gaussian database, a local shapefile, and a local Comma-Separated Values (CSV) file, thereby improving the performance of the GIS engine and having a wide range of applicability.

The underlying data source 101 may adopt distributed cluster deployment, so as to ensure high availability of underlying data.

### 2) Core engine layer 20

The core engine layer 20 may include an ES 201 and a service providing layer 202.

The ES 201 is integrated into the core engine layer 20, serves as a cache for full-text search, and may implement data consistency with the underlying data source 10 through a distributed locking mechanism, and ensure data timeliness by micro-batch updating.

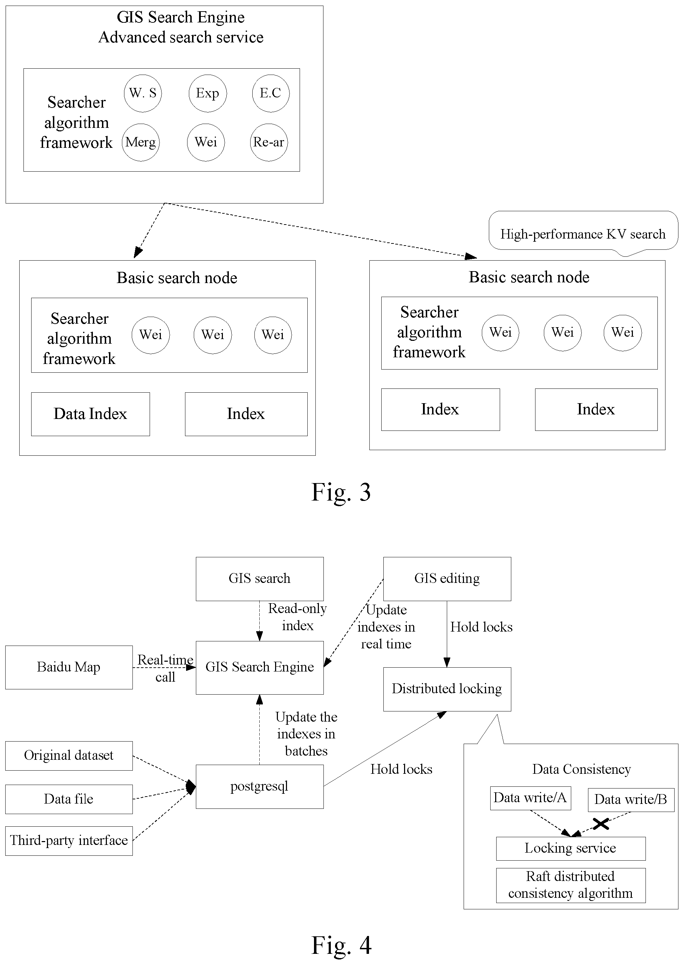

The ES 201 may also adopt distributed cluster deployment, and is internally provided with a load balancer, thereby ensuring high availability of the ES 201. Fig. 3 is a schematic diagram of distributed cluster deployment corresponding to an ES 201 according to the present disclosure. As shown in Fig. 3, in this embodiment, the ES is constructed to achieve high-performance key-value (KV) search and provide advanced search services upwards. In addition, the search accuracy can be improved by optimizing a searcher algorithm framework and by means of word segmentation (W. S), expansion (Exp), error correction (E.C), merging (Merg), weighting(Wei), and rearrangement(Re-ar). The GIS search engine shown in Fig. 3 and basic search nodes may be considered to form the ES 201 together.

Compared with the existing relational query method, the search method described in this embodiment can significantly improve search efficiency and search accuracy.

Fig. 4 is a schematic diagram of a method for supporting a plurality of data sources according to the present disclosure. As shown in Fig. 4, in this embodiment, for GIS search services, external services may be provided by reading a GIS Search Engine. The GIS Search Engine may call Baidu Map in real time to provide services such as route planning to ensure the real-time performance of Internet-related data, and may update indexes in real time through a GIS editing service and synchronize the indexes to the underlying data source by micro-batch updating through a distributed locking mechanism. The distributed locking mechanism is configured to ensure data consistency of the plurality of data sources, which can be implemented by a Raft distributed consistency algorithm, for example.

The service providing layer 202 may provide various services based on the ES 201 and the underlying data source 10. The services may include services supporting OGC standards (OGC Support) and REST-style (Restful) services. REST is the abbreviation for Representational State Transfer. The services supporting OGC standards may include a Web Map Service (WMS), a Web Feature Service (WFS), a Web Map Tile Service (WMTS), and the like. The Restful services may include a space query service, a Buffer Analysis service, a Geo Search service, a route planning service, and the like. Services specifically included may be determined according to actual requirements.

The service providing layer 202 may include a Geoserver distributed cluster for providing services supporting the OGS standards, thereby ensuring high availability of the services.

The core engine layer 20 may further include a cache layer 203 configured to cache data that meets requirements and for priority use. The requirements may be determined according to actual needs, for example, hot data may be cached. When data that needs to be used is located in a cache, it is preferred to acquire the data from the cache to improve the efficiency of data reading and service performance.

Specifically, data may be cached through a WebCache technology by using a Remote Dictionary Server (Redis) cluster.

### 3) Functional service layer 30

The functional service layer 30 may uniformly encapsulate the services provided by the core engine layer 20 into a micro-service form, so as to implement decoupling among functional services, and may support dynamic expansion and contraction, thereby achieving elastic scaling.

The functional service layer 30 may include a GIS micro-service cluster. The GIS micro-service cluster uniformly encapsulates the services provided by the core engine layer 20 into a micro-service form, provides services upwards, and achieves final presentation of an effect through an upper browser or application (APP).

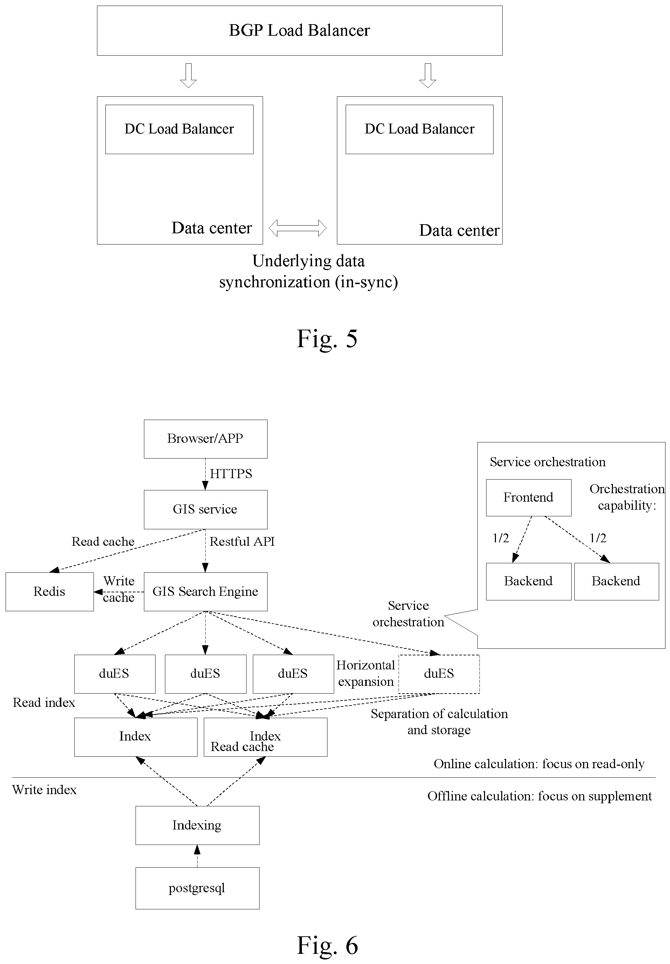

In addition, the GIS engine system 100 in this embodiment may be deployed on M data centers (machine rooms), and M is a positive integer. A specific value thereof may be determined according to an actual requirement. Fig. 5 is a schematic diagram of a plurality of data centers according to the present disclosure. As shown in Fig. 5, the data centers have their own load balancing mechanisms respectively. For example, the data centers have their own 4-layer and 7-layer load balancing mechanisms respectively, and routability and optimal routing selection among the data centers are achieved through a border gateway protocol load balancer (BGP Load Balancer), thereby implementing distributed multi-room deployment of the services.

In this embodiment, all related components in the GIS engine system 100 may adopt docker deployment, and may use kubernetes to perform service orchestration, so as to build and run agile and extensible applications and perform service monitoring through components such as Prometheus. Kubernetes is an open source system that automatically deploys, extends, and manages docker applications.

In this embodiment, service availability may also be guaranteed by establishing a ServiceLevelAgreement (SLA) for corresponding services. An operation and maintenance monitoring system built by a logging service and a notification service can inform corresponding operation and maintenance personnel by SMS or e-mail at 7^{∗}24 in time in case of service problems. The corresponding services may include various services provided by the GIS engine system 100.

Based on the above introduction, Fig. 6 is a schematic diagram of logical architecture and resource orchestration corresponding to the GIS engine system 100 according to the present disclosure. As shown in Fig. 6, mapping between postgresql and ES may be established through indexing, and the indexes are read to achieve the separation of calculation and storage. The ES includes basic search nodes (duES) and a GIS Search Engine. The duES may achieve horizontal expansion through service orchestration. The GIS Search Engine may interact with Redis to achieve efficient data caching, and provide a restful Application Programming Interface (API) upwards. GIS services serve as a functional service layer to provide services upward, and finally achieve final presentation of an effect through a browser or an APP.

In addition, the update of data may be divided into two scenarios: online calculation and offline calculation. The online calculation focuses on read-only to reduce the response time, while the offline calculation focuses on supplement to improve throughput capacity.

In conclusion, by use of the GIS engine system according to the present disclosure, a variety of different data sources may be supported, thereby improving the performance of the GIS engine and having a wide range of applicability, and multiple data sources may be fused to implement data consistency by using a distributed locking mechanism and ensure data timeliness by micro-batch updating. Full-text search may be implemented according to ES and the like, thereby improving search efficiency and search accuracy. The ES, the underlying data source, and the Geoserver all adopt distributed cluster deployment, and multi-copy configuration may be performed to satisfy data security and throughput performance, so as to ensure high availability of the services. Data reading efficiency and service performance are improved by adding a cache layer. Decoupling among functional services may be implemented through the functional service layer, and dynamic expansion and contraction of the capacity may be supported, so as to implement elastic scaling and high concurrency of the overall service.

The above is an introduction to the system embodiment, and the following is a further description of the solution according to the present disclosure through a method embodiment.

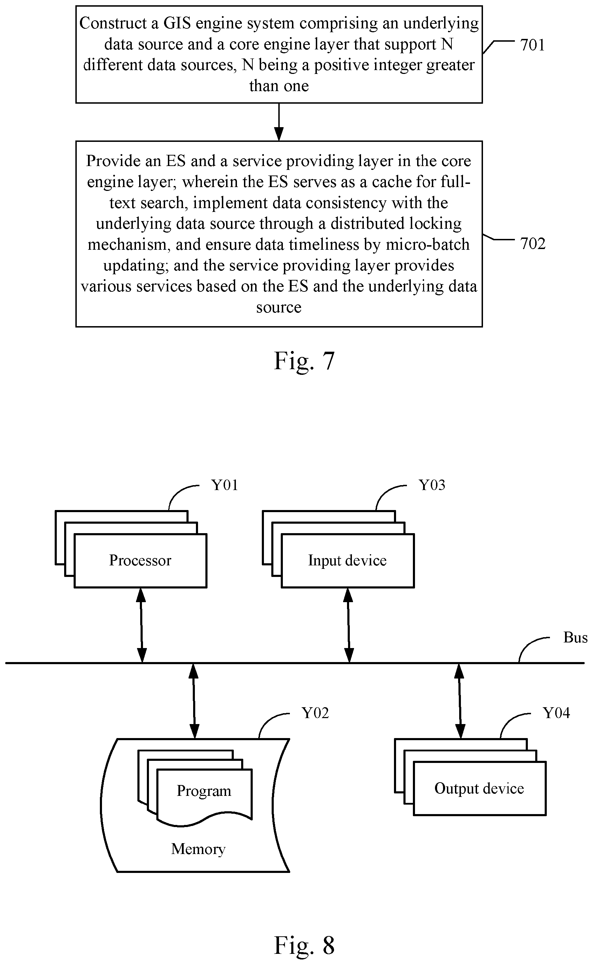

Fig. 7 is a flow chart of an embodiment of a method for implementing a GIS engine system according to the present disclosure. As shown in Fig. 7, the method includes the following specific implementations.

In 701, a GIS engine system including an underlying data source supporting N different data sources and a core engine layer is constructed, and N is a positive integer greater than one.

In 702, a full-text search layer and a service providing layer are provided in the core engine layer, the full-text search layer is configured for serving as a cache for full-text search, implementing data consistency with the underlying data source through a distributed locking mechanism, and ensuring data timeliness by micro-batch updating; and the service providing layer is configured for providing various services based on the full-text search layer and the underlying data source.

Through a customized multi-source data adapter, the underlying data source may support a variety of different data sources, such as postgresql, greenplum, a Gaussian database, a local shapefile, and a local file. The underlying data source may adopt distributed cluster deployment.

The core engine layer may further include a full-text search layer, such as an ES, and a service providing layer. The ES serves as a cache for full-text search, and may implement data consistency with the underlying data source through a distributed locking mechanism, and ensure data timeliness by micro-batch updating. The ES may also adopt distributed cluster deployment.

With the ES, high performance KV search can be implemented and advanced search services can be provided. In addition, the search accuracy can be improved by optimizing a searcher algorithm framework and by means of word segmentation, expansion, error correction, merging, weighting, and rearrangement.

The service providing layer may provide various services based on the ES and the underlying data source. The services may include services supporting OGC standards and restful services. The services supporting OGC standards may include a WMS, a WFS, a WMTS, and the like. The restful services may include a space query service, a Buffer Analysis service, a Geo Search service, a route planning service, and the like. Services specifically included may be determined according to actual requirements.

The service providing layer may include a Geoserver distributed cluster for providing services supporting the OGS standards.

The core engine layer may further include a cache layer configured to cache data that meets requirements and for priority use. The requirements may be determined according to actual needs, for example, hot data may be cached. When data that needs to be used is located in a cache, it is preferred to acquire the data from the cache. Specifically, data may be cached through a WebCache technology by using a Redis cluster.

The GIS engine system further includes: a functional service layer configured to uniformly encapsulate the services provided by the core engine layer into a micro-service form. The functional service layer may include a GIS micro-service cluster. The GIS micro-service cluster uniformly encapsulates the services provided by the core engine layer into the micro-service form.

The GIS engine system is deployed on M data centers, M is a positive integer, the data centers have their own load balancing mechanisms respectively, and routability and optimal routing selection among the data centers are achieved through a border gateway protocol load balancer.

All related components in the GIS engine system may adopt docker deployment, and may use kubernetes to perform service orchestration, so as to build and run agile and extensible applications and perform service monitoring through components such as Prometheus.

Specific implementation of the method can be obtained with reference to the related description in the above system embodiment and is not repeated.

In conclusion, by use of the GIS engine system according to the present disclosure, a variety of different data sources may be supported, thereby improving the performance of the GIS engine and having a wide range of applicability, and multiple data sources may be fused to implement data consistency by using a distributed locking mechanism and ensure data timeliness by micro-batch updating. Full-text search may be implemented according to ES and the like, thereby improving search efficiency and search accuracy. The ES, the underlying data source, and the Geoserver all adopt distributed cluster deployment, and multi-copy configuration may be performed to satisfy data security and throughput performance, so as to ensure high availability of the services. Data reading efficiency and service performance are improved by adding a cache layer. Decoupling among functional services may be implemented through the functional service layer, and dynamic expansion and contraction of the capacity may be supported, so as to implement elastic scaling and high concurrency of the overall service.

According to embodiments of the present disclosure, the present disclosure further provides an electronic device, a readable storage medium and a computer program product.

Fig. 8 is a block diagram of an electronic device for a method according to an embodiment of the present disclosure. The electronic device is intended to represent various forms of digital computers, such as laptops, desktops, workbenches, personal digital assistants, servers, blade servers, mainframe computers and other suitable computers. The electronic device may further represent various forms of mobile devices, such as personal digital assistant, cellular phones, smart phones, wearable devices and other similar computing devices. The components, their connections and relationships, and their functions shown herein are examples only, and are not intended to limit the implementation of the present disclosure as described and/or required herein.

As shown in Fig. 8, the electronic device includes: one or more processors Y01, a memory Y02, and interfaces for connecting various components, including high-speed interfaces and low-speed interfaces. The components are connected to each other by using different buses and may be installed on a common motherboard or otherwise as required. The processor may process instructions executed in the electronic device, including instructions stored in the memory or on the memory to display graphical information of a graphical user interface on an external input/output device (such as a display device coupled to the interfaces). In other implementations, a plurality of processors and/or buses may be used together with a plurality of memories, if necessary. Similarly, a plurality of electronic devices may be connected, each of which provides some necessary operations (for example, as a server array, a set of blade servers, or a multiprocessor system). One processor Y01 is taken as an example is Fig. 8.

The memory Y02 is the non-instantaneous computer-readable storage medium according to the present disclosure. The memory stores instructions executable by at least one processor to make the at least one processor perform the method according to the present disclosure. The non-instantaneous computer-readable storage medium according to the present disclosure stores computer instructions. The computer instructions are used to make a computer perform the method according to the present disclosure.

The memory Y02, as a non-instantaneous computer-readable storage medium, may be configured to store non-instantaneous software programs, non-instantaneous computer executable programs and modules, for example, program instructions/modules corresponding to the method in the embodiment of the present disclosure. The processor Y01 runs the non-instantaneous software programs, instructions and modules stored in the memory Y02 to execute various functional applications and data processing of a server, that is, to implement the method in the above method embodiment.

The memory Y02 may include a program storage area and a data storage area. The program storage area may store an operating system and an application required by at least one function; and the data storage area may store data created according to use of the electronic device. In addition, the memory Y02 may include a high-speed random access memory, and may further include a non-instantaneous memory, for example, at least one disk storage device, a flash memory device, or other non-instantaneous solid-state storage devices. In some embodiments, the memory Y02 optionally includes memories remotely disposed relative to the processor Y01. The remote memories may be connected to the electronic device over a network. Examples of the network include, but are not limited to, the Internet, intranets, blockchain networks, local area networks, mobile communication networks and combinations thereof.

The electronic device may further include: an input device Y03 and an output device Y04. The processor Y01, the memory Y02, the input device Y03 and the output device Y04 may be connected through a bus or in other manners. In Fig. 8, the connection through a bus is taken as an example.

The input device Y03 may receive input numerical information or character information, and generate key signal input related to user setting and function control of the electronic device, for example, input devices such as a touch screen, a keypad, a mouse, a trackpad, a touch pad, a pointer, one or more mouse buttons, a trackball, and a joystick. The output device Y04 may include a display device, an auxiliary lighting device and a tactile feedback device (e.g., a vibration motor). The display device may include, but is not limited to, a liquid crystal display, a light-emitting diode display, and a plasma display. In some implementations, the display device may be a touch screen.

Various implementations of the systems and technologies described herein may be implemented in a digital electronic circuit system, an integrated circuit system, an application-specific integrated circuit, computer hardware, firmware, software, and/or combinations thereof. The various implementations may include: being implemented in one or more computer programs. The one or more computer programs may be executed and/or interpreted on a programmable system including at least one programmable processor. The programmable processor may be a special-purpose or general-purpose programmable processor, receive data and instructions from a storage system, at least one input device and at least one output device, and transmit the data and the instructions to the storage system, the at least one input device and the at least one output device.

The computing programs (also referred to as programs, software, software applications, or code) include machine instructions for programmable processors, and may be implemented by using high-level procedural and/or object-oriented programming languages, and/or assembly/machine languages. As used herein, the terms "machine-readable medium" and "computer-readable medium" refer to any computer program product, device, and/or apparatus (e.g., a magnetic disk, an optical disc, a memory, and a programmable logic device) configured to provide machine instructions and/or data to a programmable processor, including a machine-readable medium that receives machine instructions serving as machine-readable signals. The term "machine-readable signal" refers to any signal for providing the machine instructions and/or data to the programmable processor.

To provide interaction with a user, the systems and technologies described here can be implemented on a computer. The computer has: a display device (e.g., a cathode-ray tube or a liquid crystal display monitor) for displaying information to the user; and a keyboard and a pointing device (e.g., a mouse or trackball) through which the user may provide input for the computer. Other kinds of devices may also be configured to provide interaction with the user. For example, a feedback provided for the user may be any form of sensory feedback (for example, visual, auditory, or tactile feedback); and input from the user may be received in any form (including sound input, voice input, or tactile input).

The systems and technologies described herein can be implemented in a computing system including background components (for example, as a data server), or a computing system including middleware components (for example, an application server), or a computing system including front-end components (for example, a user computer with a graphical user interface or network browser through which the user can interact with the implementation mode of the systems and technologies described here), or a computing system including any combination of such background components, middleware components or front-end components. The components of the system can be connected to each other through any form or medium of digital data communication (for example, a communication network). Examples of the communication network include: a local area network, a wide area network, a blockchain network, and the Internet.

The computer system may include a client and a server. The client and the server are generally far away from each other and generally interact via the communication network. A relationship between the client and the server is generated through computer programs that run on a corresponding computer and have a client-server relationship with each other.

It shall be understood that the steps can be reordered, added, or deleted using the various forms of processes shown above. For example, the steps described in the present disclosure may be executed in parallel or sequentially or in different sequences, provided that desired results of the technical solutions disclosed in the present disclosure are achieved, which is not limited herein.

The above specific implementations do not limit the extent of protection of the present disclosure. Those skilled in the art should understand that various modifications, combinations, sub-combinations, and replacements can be made according to design requirements and other factors. Any modifications, equivalent substitutions and improvements made within the spirit and principle of the present disclosure all should be included in the extent of protection of the present disclosure.

## Claims

1. A geographic information system (GIS) engine system (100), comprising:
an underlying data source (10) supporting N different data sources, and a core engine layer (20), N being a positive integer greater than one; wherein the core engine layer comprises:
a full-text search engine (201) configured for serving as a cache for full-text search, implementing data consistency with the underlying data source through a distributed locking mechanism, and ensuring data timeliness by micro-batch updating; and
a service providing layer (202) configured for providing various services based on the full-text search engine and the underlying data source.

2. The GIS engine system (100) according to claim 1, further comprising:
a functional service layer (30) configured for uniformly encapsulating the services provided by the core engine layer into a micro-service form.

3. The GIS engine system (100) according to claim 2, wherein the underlying data source (10) and the full-text search engine (201) each adopts distributed cluster deployment;
wherein the services comprise: services that support an Open Geospatial Consortium, and the service providing layer (202) comprises: a distributed cluster of map servers configured for providing the services that support the Open Geospatial Consortium; and
wherein the functional service layer (30) comprises: a GIS micro-service cluster configured for uniformly encapsulating the services provided by the core engine layer into the micro-service form.

4. The GIS engine system (100) according to any one of claims 1 to 3, wherein the core engine layer (20) further comprises:
a cache layer (203) configured for caching data that meets requirements and for priority use.

5. The GIS engine system (100) according to any one of claims 1 to 4, wherein the GIS engine system (100) is deployed on M data centers, M is a positive integer, and wherein the data centers have their own load balancing mechanisms respectively, and routability and optimal routing selection among the data centers are achieved through a border gateway protocol load balancer.

6. The GIS engine system (100) according to any one of claims 1 to 5, wherein all related components in the GIS engine system (100) adopt docker deployment.

7. A method for implementing a geographic information system (GIS) engine system (100), comprising:
constructing (701) a GIS engine system (100) comprising an underlying data source (10) supporting N different data sources and a core engine layer (20), N being a positive integer greater than one; and
providing (702) a full-text search engine (201) and a service providing layer (202) in the core engine layer;
wherein the full-text search engine (201) is configured for serving as a cache for full-text search, implementing data consistency with the underlying data source through a distributed locking mechanism, and ensuring data timeliness by micro-batch updating; and the service providing layer (202) is configured for providing various services based on the full-text search engine and the underlying data source.

8. The method according to claim 7, wherein the GIS engine system (100) further comprises:
a functional service layer (30) configured for uniformly encapsulating the services provided by the core engine layer into a micro-service form.

9. The method according to claim 8, wherein the underlying data source (10) and the full-text search engine (201) each adopts distributed cluster deployment;
wherein the services comprise: services that support an Open Geospatial Consortium, and the service providing layer (202) comprises: a distributed cluster of map servers configured for providing the services that support the Open Geospatial Consortium; and
wherein the functional service layer (30) comprises: a GIS micro-service cluster configured for uniformly encapsulating the services provided by the core engine layer into the micro-service form.

10. The method according to any one of claims 7 to 9, wherein the core engine layer (20) further comprises:
a cache layer (203) configured for caching data that meets requirements and for priority use.

11. The method according to any one of claims 7 to 10, wherein the GIS engine system (100) is deployed on M data centers, M is a positive integer, and wherein the data centers have their own load balancing mechanisms respectively, and routability and optimal routing selection among the data centers are achieved through a border gateway protocol load balancer.

12. The method according to any one of claims 7 to 11, wherein all related components in the GIS engine system (100) adopt docker deployment.

13. An electronic device, comprising:
at least one processor (Y01); and
a memory (Y02) in communication connection with the at least one processor (Y01); wherein
the memory (Y02) stores instructions executable by the at least one processor (Y01), and the instructions are executed by the at least one processor (Y01) to enable the at least one processor (Y01) to carry out the method according to any one of claims 7 to 12.

14. A non-transitory computer-readable storage medium storing instructions, which, when executed by a computer, cause the computer to carry out the method according to any one of claims 7 to 12.

15. A computer program product comprising instructions which, when the program is executed by a computer, cause the computer to carry out the method according to any one of claims 7 to 12.
